Europäisches Patentamt

European Patent Office

Office européen des brevets

(19)

(11) Veröffentlichungsnummer: · **0 005 213**
**A1**

(12) # EUROPÄISCHE PATENTANMELDUNG

(21) Anmeldenummer: 79101185.1

(51) Int. Cl.²: **B 29 H 17/00**

(22) Anmeldetag: 19.04.79

(30) Priorität: 29.04.78 DE 2819015

(43) Veröffentlichungstag der Anmeldung: 14.11.79
Patentblatt 79/23

(84) Benannte Vertragsstaaten: **BE DE FR GB IT NL SE**

(71) Anmelder: **BAYER Aktiengesellschaft, Zentralbereich Patente,Marken und Lizenzen Bayerwerk, D-5090 Leverkusen 1 (DE)**

(72) Erfinder: **Knipp, Ulrich, Dr., Haberlandstrasse 3, D-5060 Bergisch-Gladbach 2 (DE)**
Erfinder: **Sahler, Gerd, Engstenberg E 31, D-5090 Leverkusen (DE)**
Erfinder: **Ganster, Otto, Dr., Berliner Strasse 64, D-5090 Leverkusen (DE)**

(54) **Luftreifen und Verfahren zu seiner Herstellung.**

(57) Bei rotationsgeformten Reifen muss die Lauffläche (1) nicht an den Reifentorus (2) geklebt werden, sondern es wird bei dieser Herstellungsweise auch bei verschiedenem, aber artverwandtem Material eine feste Verbindung erhalten. Besonders bevorzugt sind für diesen Reifentyp Elastomere auf Polyurethan-Basis.

Bei dem exothermen Reaktionsguss entfallen die aufwendigen Heizvorrichtungen. Auch zusätzlich innen- oder aussenummantelte Reifen sind so verhältnismässig einfach herstellbar.

EP 0 005 213 A1

BAYER AKTIENGESELLSCHAFT    5090 Leverkusen, Bayerwerk
Zentralbereich    Hö/bc
Patente, Marken und Lizenzen

Luftreifen und Verfahren zu seiner Herstellung

Die Erfindung betrifft einen Luftreifen, bei dem Lauffläche und Reifentorus aus verschiedenen Elastomeren bestehen und Verfahren zur Herstellung dieses Reifens.

Im Rotationsformverfahren hergestellte Fahrzeugreifen aus thermoplastischen Elastomeren sind bekannt. Für hochwertige Reifen mit spezieller Lauffläche muß die getrennt hergestellte Lauffläche auf den Reifentorus geklebt werden. Diese Verbindung ist bei hochbeanspruchten Reifen eine Schwachstelle. Außerdem ist bei thermoplastischen Elastomeren das Rotationsformen sehr aufwendig.

Es wurde nun ein Verfahren zur Herstellung eines Luftreifens gefunden, das dadurch gekennzeichnet ist, daß zunächst in einer Rotationsform ein reaktionsgießfähiges Gemisch eingebracht wird und durch Schleudern (eindimensionales Rotieren um die Achse der Form) die Lauffläche des Reifens aufgebaut wird und daran anschließend in der gleichen Form

Le A 18 735 -Ausland

- 2 -

durch Einbringen eines reaktionsgießfähigen Gemisches und durch zweidimensionales Rotationsgußformen der Reifentorus aufgebaut wird. Weitere erfindungsgemäße Ausgestaltungen des Verfahrens sind in den Patentansprüchen beschrieben. Gegenstand der Erfindung sind auch Luftreifen für Fahrzeuge aller Art, die nach diesen Verfahren hergestellt sind. Sie sind gekennzeichnet dadurch, daß Laufflächen und Reifentorus aus einem reaktionsgießfähigen Elastomeren aufgebaut sind und Reifentorus und Lauffläche nicht verklebt, sondern herstellungsbedingt durch die Rotationsformung des Reifentorus miteinander verbunden worden sind. Weitere vorteilhafte Ausgestaltungen des Reifens sind in den Unteransprüchen beschrieben.

Obwohl bei dem Reifen Reifentorus und Lauffläche aus verschiedenem, der Beanspruchung angepaßtem Material bestehen, wird durch das Rotationsformen eine feste Verbindung zwischen Lauffläche und Reifentorus gebildet. Diese gute Verbindung rührt daher, weil es sich um verwandtes Material, ein reaktionsgießfähiges Elastomer bevorzugt des gleichen Typs, handelt. Bevorzugt werden reaktionsgießfähige Elastomere auf Polyurethanbasis eingesetzt. Aufgrund der vorteilhaften mechanischen Werte dieses Materials ergeben sich hochwertige Reifen mit verhältnismäß geringer Wandstärke, weil keine hohen Sicherheitszuschläge erforderlich sind. Die Verwendung von reaktionsgießfähigen Elastomeren gewährleistet eine wirtschaftliche Verarbeitung. Der Reaktionsguß ist exotherm; dadurch können die aufwendigen Heizvorrichtungen entfallen, die für den Rotationsguß von thermoplastischen Elastomeren notwendig sind, wo die schlecht wärmeleitenden Thermoplaste in fester, also granulierter oder pulverartiger Form in der Form bis zur

Le A 18 735

- 3 -

Schmelztemperatur von mehr als 200$^{O}$C aufgeheizt werden müssen. Das Verfahren ist insbesondere für großdimensionierte Reifen geeignet. Es ist vorteilhaft, daß durch das erfindungsgemäße Herstellungsverfahren Armierungseinlagen in den Reifentorus oder zwischen Lauffläche und Reifentorus eingebracht werden können.

Schnitte durch den Reifen sind in der Zeichnung schematisch dargestellt und im folgenden beispielhaft beschrieben.

Es zeigen

Figur 1    Reifen, aufgebaut aus 2 reaktionsgießfähigen Elastomeren;
Figur 2    Reifen mit mehrschichtigem Reifentorus;
Figur 3    Reifen mit Faserarmierung unter der Lauffläche;
Figur 4    Reifen mit Außenhaut.

Die Reifen werden in einer geschlossen Form erzeugt. Eine Vorrichtung zum Rotationsformen ist beispielsweise in der deutschen Offenlegungsschrift 2 316 984 beschrieben. Die Lauffläche 1 wird durch Schleudern eines reaktionsfließfähigen Gemisches um die Reifenachse gebildet. Nach der Verfestigung wird erneut ein reaktionsgießfähiges Gemisch in die Form eingebracht, und durch zweidimensionales Rotieren der Reifentorus 2 aufgebaut. Üblicherweise wird für den Reifentorus 2 ein härteres Material als für die Lauffläche 1 bevorzugt.

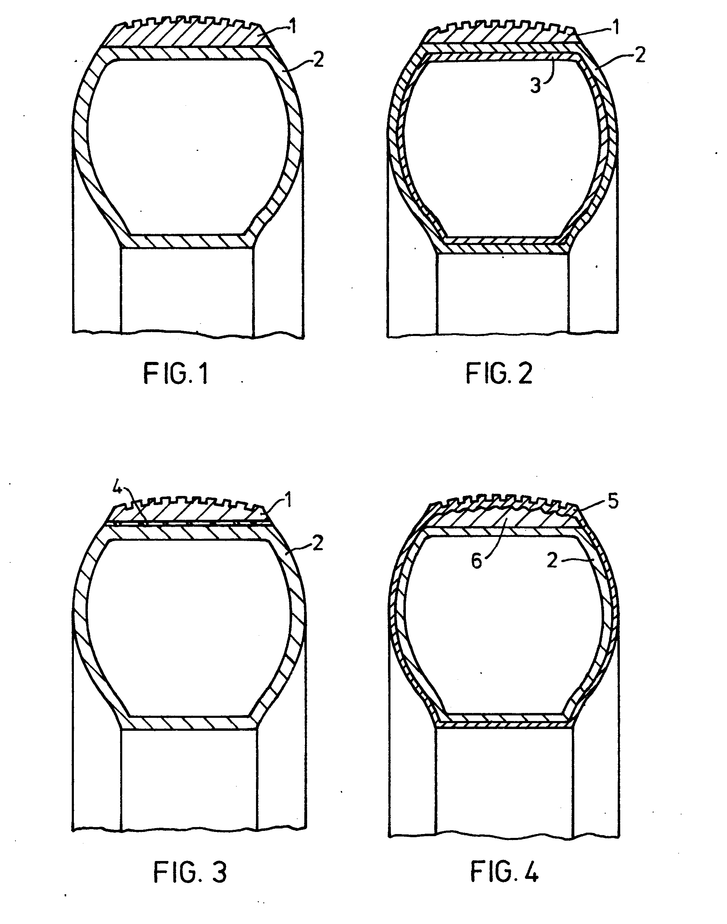

In Figur 2 ist der Reifentorus zweischichtig 2,3 aufgebaut. Er wird durch zwei aufeinanderfolgende, zweidimensionale Rotationsvorgänge gebildet. Mehrschichtiger Aufbau wird

Le A 18 735

- 4 -

dadurch möglich, daß die Einfüllöffnung der Form im Reifenfuß mit einem Verschluß versehen ist, der weit in den
Formenhohlraum hineinreicht und der beim zweiachsialen
Rotationsformen nicht beschichtet wird. Erst nach dem
Einfüllen des Reaktionsgemisches für die innerste Schicht
wird ein Verschluß eingesetzt, der mit dem Formboden abschließt. Beim letzten zweidimensionalen Rotationsguß
wird die Einfüllöffnung im Reifentorus geschlossen. Der
etwas abweichende Aufbau des Reifens an dieser Stelle
hat, da sie im Reifenfuß liegt, keinen Einfluß auf die
Reifenfestigkeit.

Bei dem Reifen in Figur 3 sind zwischen Lauffläche 1 und
Torus 2 Fasern 4 als Armierung vorhanden. Die Fasern werden in der einseitig offenen Form auf die flüssige oder
zumindest noch klebrige Oberfläche des die Lauffläche 1
bildenden Reaktionsgemisches verteilt. Zur Torusherstellung wird die Form geschlossen. Die Form ist dann nur
noch mit einer Einfüllöffnung im Reifenfuß versehen.

In Figur 4 ist eine Reifenvariante dargestellt, ein Reifen wie in Figur 1 mit einer Ummantelung 5. Diese Ummantelung 5 wird durch zweidimensionales Rotationsformen
zuerst gebildet. Bei diesem Reifentyp ist besonders vorteilhaft, daß ein bei Anformung des Reifentorus an die
Lauffläche mögliches Hinterfließen der Lauffläche ausgeschlossen ist. Die im einachsialen Schleuderguß eingebrachte Hinterfütterung 6 kann aus einem weniger hochwertigen Elastomeren bestehen. Die Ummantelung ist eine
besonders kerbzähe, einreiß- und verschleißfeste Außenhaut.

Le A 18 735

- 5 -

Beispiele für reaktionsgießfähige Gemische:

1. Reaktionsgießfähiges Gemisch für eine Lauffläche

Rezeptur:

100 Gew.-Teile Desmophen[R] 2001 ein Polyester auf Basis Adipinsäure, Butandiol und Äthylenglykol, MG = 2000, ein Produkt der Bayer AG Leverkusen;
9 Gew.-Teile Butandiol-(1,4);
40 Gew.-Teile 4,4'-Diisocyanato-diphenylmethan.

Das Gemisch aus Desmophen 2001 und Butandiol wird bei 60°C mit verflüssigtem 4,4'-Diisocyanato-diphenylmethan umgesetzt. Die Topfzeit beträgt etwa 3 Minuten. In 30 Minuten ist das Elastomer verfestigt.
Die Rezeptur kann auch Katalysatoren, Oxidations- und Hydrolyseschutzmittel, sowie Ruß, Weichmacher und Füllstoffe als weitere Komponenten enthalten.

Das Elastomer hat folgende mechanische Eigenschaften:

| Zugfestigkeit | (DIN 53504) | 34 MPa |
|---|---|---|
| Bruchdehnung | (DIN 53504) | 620 % |
| Stoßelastizität | (DIN 53512) | 40 % |
| Weiterreißfestig-keit | (DIN 53515) | 51 KN/m |
| Abrieb | (DIN 53516) | 33 $mm^3$ |
| Härte | (DIN 53513) | 80 Shore A |

Le A 18 735

- 6 -

2. **Reaktionsgießfähiges Gemisch für eine Lauffläche**

Rezeptur:

100 Gew.-Teile Desmodur 2001;
 18 Gew.-Teile Naphthylendiisocyanat-(1,5);
1,38 Gew.-Teile Butandiol-(1.4);
0,92 Gew.-Teile Trimethylolpropan.

Bei 125°C wird ein Voraddukt aus De 2001 und Naphthylendiisocyanat hergestellt, das nach Abklingen der Reaktion mit einem Gemisch aus Butandiol und Trimethylolpropan umgesetzt wird. Die Gießzeit beträgt 4 bis 5
Minuten, nach etwa 50 Minuten hat sich die Masse verfestigt (Formentemperatur 110°C).

Mechanische Daten:

| | | | |
|---|---|---|---|
| Zugfestigkeit | (DIN 53504) | 35 | MPa |
| Bruchdehnung | (DIN 53504) | 380 | % |
| Weiterreißfestigkeit | (DIN 53515) | 20 | KN/m |
| Stoßelastizität | (DIN 53512) | 45 | % |
| Abrieb | (DIN 53516) | 50 | mm$^3$ |
| Härte | (DIN 53512) | 65 | Shore A |

3. **Reaktionsgießfähiges Gemisch für den Reifentorus**

Rezeptur:

| | | |
|---|---|---|
| Polyoxypropylenglykol (OH-Zahl 75) | 1,00 | Mol |
| Toluylen-(2,4)-diisocyanat | 2,11 | Mol |
| NCO-Gehalt des Prepolymer | 5 | % |
| Diäthyl-tolamin | 1,11 | Mol |

Le A 18 735 -Ausland

Man stellt bei 70°C aus den Äthern und 2,4-TDI Voraddukte her, die bei der gleichen Temperatur mit den Aminen endverlängert werden. Die Reaktionsgemische können außer den oben angegebenen Produkten noch Katalysatoren, Oxidations- und Hydrolyseschutzmittel, sowie Ruß und Füllstoffe enthalten.

Mechanische Daten:

| | | | |
|---|---|---|---|
| Zugfestigkeit | (DIN 53504) | 30 | MPa |
| Bruchdehnung | (DIN 53504) | 580 | % |
| Weiterreißfestigkeit | (DIN 53515) | 32 | KN/m |
| Stoßelastizität | (DIN 53512) | 52 | % |
| Härte | (DIN 53512) | 85 | Shore A |
| | (DIN 53512) | 32 | Shore D |

4. Reaktionsgießfähiges Gemisch für den Reifentorus

Rezeptur:

| | |
|---|---|
| Polyoxypropylenglykol (OH-Zahl 112) | 1,00 Mol |
| Toluylen-(2,4)-diisocyanat | 1,85 Mol |
| NCO-Gehalt des Prepolymer | 5 % |
| 4-Chlor-3,5-diaminobenzoesäureisobutylester | 0,79 Mol |

Man stellt bei 70°C aus den Äthern und Toluylen-(2,4)-diisocyanat Voraddukte her, die bei der gleichen Temperatur mit den Aminen endverlängert werden. Die Reaktionsgemische können außer den oben angegebenen Produkten noch Katalysatoren, Oxidations- und Hydrolyseschutzmittel sowie Ruß und Füllstoffe enthalten.

Le A 18 735

- 8 -

Mechanische Daten:

| | | | |
|---|---|---|---|
| Zugfestigkeit | (DIN 53504) | 36,5 | MPa |
| Bruchdehnung | (DIN 53504) | 545 | % |
| Weiterreißfestigkeit | (DIN 53515) | 75 | KN/m |
| Rückprallelastizität | (DIN 53512) | 38 | % |
| Härte | (DIN 53512) | 92 | Shore A |
| | (DIN 53512) | 42 | Shore D |

5. <u>Reaktionsgießfähiges Gemisch mit faserigen Füllstoffen</u>

Rezeptur:

100 Gew.-Teile Desmophen 2001
9,9 Gew.-Teile Butandiol-(1.4)
41 Gew.-Teile 4,4'-Diisocyanato-diphenylmethan
5 Gew.-Teile Glasfaser Vetrotrex[R] EC 10-80/3 mm
(Hersteller ist die Firma Gevetex, Herzogenrath)

Mechanische Daten:

| | | | |
|---|---|---|---|
| Härte | (DIN 53512) | 87 | Shore A |
| Spannung bei 100 % | (DIN 53504) | 16 | MPa |
| bei 300 % | (DIN 53504) | 19 | MPa |
| Zugfestigkeit | (DIN 53504) | 39 | MPa |
| Bruchdehung | (DIN 53504) | 440 | % |
| Weiterreißfestigkeit | (DIN 53515) | 148 | KN/m |
| Elastizität | (DIN 53512) | 42 | % |
| Abrieb | (DIN 53516) | 36 | $mm^3$ |

Le A 18 735

- 9 -

6. Vergleichsbeispiel zu 5

Rezeptur:

100 Gew.-Teile Desmophen 2001
9,9 Gew.-Teile Butandiol-(1.4)
41 Gew.-Teile 4,4'-Diisocyanato-diphenylmethan

Mechanische Daten:

| Härte | (DIN 53512) | 85 Shore A |
|---|---|---|
| Spannung bei 100 % | (DIN 53504) | 6 MPa |
| 300 % | (DIN 53504) | 17 MPa |
| Zugfestigkeit | (DIN 53504) | 35 MPa |
| Bruchdehnung | (DIN 53504) | 450 % |
| Weiterreißfestigkeit | (DIN 53515) | 80 KN/m |
| Elastizität | (DIN 53512) | 43 % |
| Abrieb | (DIN 53516) | 25 mm$^3$ |

Le A 18 735

- 10 -

Patentansprüche

1) Reifen bei dem Lauffläche und Reifentorus aus verschiedenen Elastomeren bestehen, dadurch gekennzeichnet, daß Lauffläche (1) und Reifentorus (2,3) aus reaktionsgießfähigen Elastomeren aufgebaut sind und Reifentorus (2) und Lauffläche (1) nicht geklebt, sondern herstellungsbedingt durch die Rotationsformung des Reifentorus (2) miteinander verbunden worden sind.

2) Luftreifen nach Anspruch 1, dadurch gekennzeichnet, daß zwischen Lauffläche (1) und Reifentorus (2) Verstärkungsfasern (4) vorhanden sind.

3) Luftreifen nach Ansprüchen 1 und 2, dadurch gekennzeichnet, daß im Reifentorus (2) Verstärkungsfasern eingebaut sind.

4) Luftreifen nach Ansprüchen 1 bis 3, dadurch gekennzeichnet, daß der Reifentorus aus mehreren, bevorzugt 2 Schichten (2,3) reaktionsgießfähiger Elastomere aufgebaut ist.

5) Luftreifen nach Ansprüchen 1 bis 4, dadurch gekennzeichnet, daß der Reifen zusätzlich noch eine kerbzähe und verschleißfeste Ummantelung (5) aus einem reaktionsgießfähigen Elastomeren hat.

6) Luftreifen nach Ansprüchen 1 bis 5, dadurch gekennzeichnet, daß die reaktionsgießfähigen Elastomere Polyurethanelastomere sind.

Le A 18 735 -Ausland

- 11 -

7) Verfahren zur Herstellung eines Luftreifens nach Ansprüchen 1 bis 6, dadurch gekennzeichnet, daß zunächst in einer Rotationsform ein reaktionsgießfähiges Gemisch eingebracht wird und durch Schleudern (eindimensionales Rotieren und um die Achse der Form) die Lauffläche des Reifens aufgebaut wird und daran anschließend in der gleichen Form durch Einbringen eines reaktionsgießfähigen Gemisches und durch zweidimensionales Rotationsgußformen der Reifentorus aufgebaut wird.

8) Verfahren nach Anspruch 7, dadurch gekennzeichnet, daß Fasern in der einseitig offenen Form auf die flüssige oder zumindest noch klebrige Oberfläche des die Lauffläche bildenden Reaktionsgemisches aufgebracht werden und dann der Reifentorus erzeugt wird.

9) Verfahren nach Ansprüchen 7 und 8, dadurch gekennzeichnet, daß der Torus durch wiederholtes Einbringen reaktionsgießfähiger Gemische und zweidimensionales Rotationsformen mehrschichtig aufgebaut wird.

10) Verfahren zur Herstellung eines Reifens nach Anspruch 5, dadurch gekennzeichnet, daß durch Einbringen eines rotationsgießfähigen Gemisches und zweidimensionales Rotationsgußformen die Ummantelung des Reifens erzeugt wird und dann ein Luftreifen nach dem Verfahren in den Ansprüchen 7 bis 9 innerhalb der Ummantelung erzeugt wird.

Le A 18 735

FIG. 1

FIG. 2

FIG. 3

FIG. 4

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | B 29 H 17/00 |
| | FR - A - 2 187 535 (FIRESTONE)<br>* Seite 4, Zeilen 6-22; Seite 8, Zeilen 8-19,29-35; Seite 10, Zeilen 1-18; Seite 15, Zeile 21 - Seite 17, Zeile 8 * | 1-3,6, 8 | |
| | --- | | |
| | US - A - 4 044 811 (T. DUDEK)<br>* Spalte 8, Zeilen 33-65; Spalte 2, Zeile 46 - Spalte 3, Zeile 30 * | 1,4;6 | |
| | --- | | RECHERCHIERTE SACHGEBIETE (Int. Cl.²) |
| A | US - A - 3 396 773 (S. ALDERFER) | | B 29 H 17/00 |
| A | FR - A - 2 179 933 (SCHENUIT IND.) | | |
| A | US - A - 3 470 933 (E. MOLNAR) | | |
| A | FR - A - 1 462 055 (DUNLOP) | | |
| A | FR - A - 1 470 691 (DUNLOP) | | |
| A | US - A - 4 049 767 (D.V. VAIDYA) | | |
| | FR - A - 1 193 269 (PIRELLI) | | |
| | --- | | — |

Der vorliegende Recherchenbericht wurde für alle Patentansprüche erstellt.

| Recherchenort | Abschlußdatum der Recherche | Prüfer |
|---|---|---|
| Den Haag | 10-07-1979 | SCHMITT |

EPA form 1503.1  06.78